(19) **Europäisches Patentamt**

**European Patent Office**

**Office européen des brevets**

(11) **EP 1 070 280 B1**

(12) **EUROPÄISCHE PATENTSCHRIFT**

(45) Veröffentlichungstag und Bekanntmachung des Hinweises auf die Patenterteilung:
**14.08.2002 Patentblatt 2002/33**

(21) Anmeldenummer: **98961066.2**

(22) Anmeldetag: **03.11.1998**

(51) Int Cl.⁷: $G05B\ 13/02$, $B65H\ 23/182$

(86) Internationale Anmeldenummer:
**PCT/DE98/03204**

(87) Internationale Veröffentlichungsnummer:
**WO 99/50719 (07.10.1999 Gazette 1999/40)**

(54) **VERFAHREN UND ANORDNUNG ZUR NEURONALEN MODELLIERUNG EINER PAPIERWICKELVORRICHTUNG**

METHOD AND DEVICE FOR NEURONAL MODELLING OF A PAPER WINDING DEVICE

PROCEDE ET DISPOSITIF POUR TECHNIQUE NEURONALE DE MODELISATION D'UNE BOBINEUSE POUR PAPIER

(84) Benannte Vertragsstaaten:
**AT BE CH DK ES FI FR GB IT LI NL PT SE**

(30) Priorität: **31.03.1998 DE 19814407**

(43) Veröffentlichungstag der Anmeldung:
**24.01.2001 Patentblatt 2001/04**

(73) Patentinhaber: **SIEMENS AKTIENGESELLSCHAFT 80333 München (DE)**

(72) Erfinder:
- **WIENHOLT, Willfried D-81737 München (DE)**
- **LIEPOLD, Helmut D-91350 Gremsdorf (DE)**
- **SCHÄFFNER, Clemens D-82152 Martinsried (DE)**

(56) Entgegenhaltungen:
**DE-A- 19 505 506          DE-A- 19 531 692**

## Beschreibung

Die Erfindung bezieht sich auf ein Verfahren und einer Anordnung zur Erstellung eines neuronalen Modelles von einer Papierwickelvorrichtung, wie beispielsweise einem Rollenschneider.

Bei der Produktion von Papier hat sich die Speicherung des Papiers in Form von Rollen, welche auch als Tambour oder Wikkel bezeichnet werden bewährt, weil dadurch auf kleinem Raum sehr große Papiermengen faltenfrei zur Lagerung, zum Transport und zur Weiterverarbeitung gespeichert werden können.

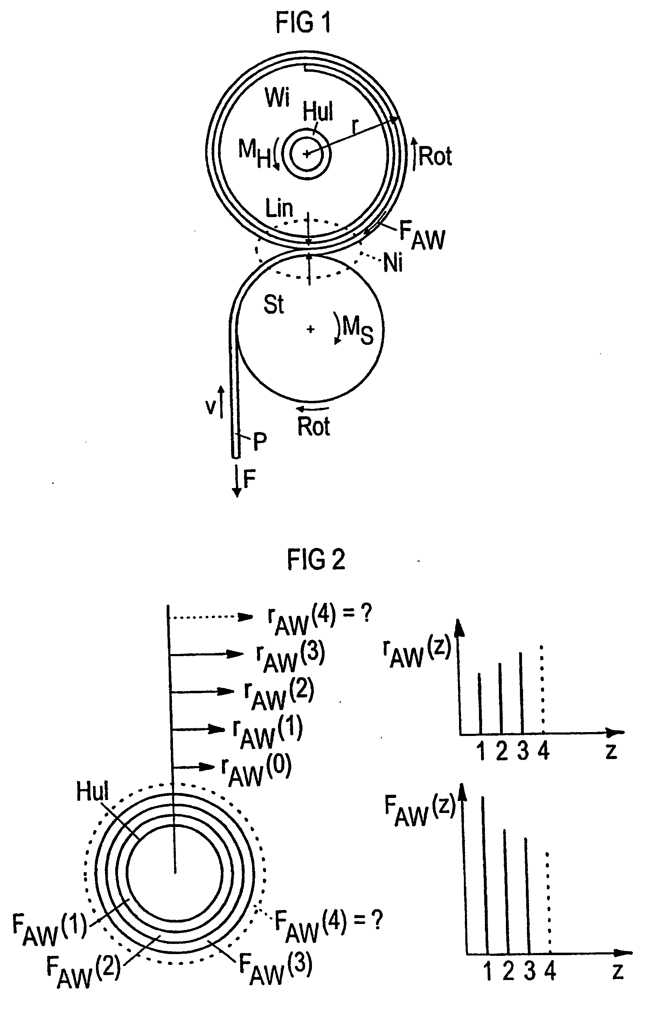

Bei einem Rollenschneider besteht die Aufgabe der darin vorhandene Papierwickelvorrichtung darin, einen breiten Papierwickel, wobei gängige Papierbreiten durchaus 9,50 m betragen können, abzuwickeln und die Papierbahn entsprechend den Kundenvorgaben zu konfektionieren. Hierzu werden diese in Längsrichtung zerschnitten und die dabei entstehenden schmaleren Papierbahnen werden wieder aufgewickelt. Für die Aufwicklung werden wegen ihrer technischen Vorzüge häufig Stützwalzenwickler eingesetzt, von denen einer in Figur 1 schematisch dargestellt ist. Dieser Wickelvorgang beeinflußt in entscheidendem Maße die Qualität des Papiers auf den gewickelten Rollen, die stark von den in den Rollen auftretenden Spannungen im Papier abhängt. Die sich dabei in Wickel ergebenden Tangential- und Radialspannungen werden unter anderem von folgendem Einfluß- und Steuergrößen der Papierwickelvorrichtung und des Papiers beeinflußt:

- Bei dem Zentrumsantrieben der Wickelstationen durch deren Momente und Drehzahlen.
- Beim Stützwalzenantrieb durch dessen Moment und Drehzahl.
- Bei den Wickelstationen durch den Wickelradius, die Linienkraft im Nip, Einstellungen der Reibdämpfer und der Breite der Wickel.
- Von geometrischen Einflußgrößen, wie dem Stützwalzenradius, der Breite des Tambours, und dem Radius der Hülse, auf die die Papierwickel aufgewickelt werden.
- Von den Papiereigenschaften, wie dem Elastizitätsmodul, dem Flächengewicht pro Dichte, der Rauhigkeit, der Glätte, der Feuchte, der Porosität, sowie der Bruchdehnung.
- Von sonstigen Einflußgrößen, wie der Bahnkraft, der Rauhigkeit der Stützwalze, dem Reibwert der Stützwalze für jede Papiersorte, sowie dem Elastizitätsmodul der Hülse, auf die gewickelt wird.

Da diese Einfluß- und Steuergrößen auch noch von Umgebungsbedingungen, wie beispielsweise der Luftfeuchtigkeit und der Temperatur abhängen, lassen sich solche Wickelvorgänge sehr schwer analytisch beschreiben. Aus diesen Gründen ist es besonders schwierig die Qualitätsanforderungen, die an solche Wickel gestellt werden, zu erfüllen und gleichbleibend einzuhalten. Dabei wird insbesondere beim Stand der Technik immer noch auf Expertenwissen zurückgegriffen. Vor allen Dingen soll sichergestellt werden, daß reproduzierbare Wickel mit einem optimalen Wickelhärteaufbau beim Wickelvorgang entstehen. Weiterhin soll dabei ein seitliches Verlaufen, das auch Teleskopieren der Rolle genannt wird, vermieden werden. Insbesondere sollen Risse und Platzer sowie plastische Verformungen beim Wickelvorgang ausgeschlossen werden können.

Bisher werden die Steuergrößen für solche Papierwickelvorrichtungen und insbesondere für Rollenschneider in Form von Sollwertstrajektorien in einer Inbetriebnahmephase durch Inbetriebsetzungsingenieure manuell und auf Basis ihres Erfahrungswissens festgelegt. Dabei ist viel technologisches Knowhow, Geschick und Zeit erforderlich. Im allgemeinen wird für jede Papiersorte des Produktspektrums ein separater Satz von Sollwerttrajektorien der Papierwickelvorrichtungen festgelegt und beispielsweise im Prozeßrechner, der den Rollenschneider steuert, abgespeichert. Bei einem späteren Betrieb werden die Sollwerttrajektorien aus dem Speicher ausgelesen und zur Steuerung der Wikkelvorrichtung eingesetzt. Durch diese Vorgehensweise wird ein bestimmtes Qualitätsniveau erreicht; die dabei erzielbare Qualität wird jedoch durch folgende Tatsachen begrenzt:

- Es kann nicht sichergestellt werden, daß immer optimale Steuertrajektorien zum Einsatz kommen, weil kein mathematisches Modell zur Bestimmung optimaler Steuertrajektorien vorliegt. Fallweise können also suboptimale Steuertrajektorien angewandt werden.
- Drifts von Meßgeräten oder in Folge von Verschleiß bleiben unberücksichtigt.
- Streuungen der Papierparameter innerhalb einer Sorte, wie beispielsweise des Flächengewichtes oder des Elastizitätsmoduls bleiben unberücksichtigt.

Falls sich durch die genannten Effekte während des Betriebs eines Rollenschneiders oder einer anderen Papierwickelvorrichtung die Wickelqualität unterhalb eines akzeptablen Wertes verschlechtert, so muß der Anlagenfahrer korrigierend von Hand eingreifen.

Aus DE 195 31 692 A1 ist es bekannt, ein neuronales Netz bei einer Papierwickelvorrichtung zur Störgrößenkompensation einzusetzen.

Allgemeine theoretische Grundlagen für die Vorgänge die beim Papierwickeln auftreten werden in H.-J. Schaffrath, F. Hibinger und L. Göttsching "Numerische Berechnung von Spannungsverläufen und Wikkelhärte in einer Papierrolle", Seiten 350 - 361, Heft 6, 1994 angegeben. Bisher sind keine Verfahren zur automatisierten Erstellung von Steuerparametern für Papierwickelvorrichtungen und insbesondere für Rollenschneider bekannt.

Die der Erfindung zugrundeliegende Aufgabe besteht darin, ein Verfahren und eine Anordnung zur neuronalen Modellierung von Papierwickelvorrichtungen und insbesondere zur Optimierung der Steuerparameter dieser Vorrichtungen anzugeben.

Diese Aufgabe wird vor das Verfahren gemäß den Merkmalen des Patentanspruches 1 und für die Anordnung gemäß den Merkmalen des Patentanspruches 8 gelöst. Weiterbildungen der Erfindung ergeben sich aus den abhängigen Ansprüchen.

Ein besonderer Vorteil des erfindungsgemäßen Verfahrens besteht darin, daß das neuronale Modell unter Zuhilfenahme einer Zwischengröße, der Bahnkraft oder einer mit ihr korrelierten Meßgröße, erstellt wird, wobei diese aus dem Zusammenhang zwischen Wickelradius und Lagenanzahl bestimmbar ist. Da für diesen Zusammenhang Meßgrößen am realen System ermittelt werden und für verschiedene Zeitpunkte zur Verfügung stehen, kann ein neuronales Netz mit Steuerparametern direkt als Modell eines Nips trainiert werden. Der Vorteil besteht darin, daß also lediglich der Zusammenhang zwischen Steuergrößen und Bahnkraft oder mit ihr korrelierter Größe durch das neuronale Netz modelliert werden muß und daß für die Bestimmung der Wickelgüte in Abhängigkeit der Bahnkraft bekannte Zusammenhänge aus dem Stand der Technik verwendet werden können. Wird als mit der Bahnkraft korrelierte Größe die mittlere Lagendicke verwendet so, kann diese über die Messung der Radiuszunahme bei gleichzeitiger Zählung der Lagenanzahl bestimmt werden Bezüglich Detailinformationen zu diesem Thema wird auch auf den zitierten Stand der Technik in der genannten Druckschrift verwiesen.

Vorteilhaft läßt sich das vorgeschlagene Verfahren zweistufig anwenden. Während beispielsweise ein neuronales Netz mit einer Papierwickelvorrichtung gekoppelt ist und diesem die Einfluß- und Steuergrößen zugeführt werden, kann es den Zusammenhang zwischen Lagenanzahl und Steuerparametern, sowie der Bahnkraft bzw. Der mit ihr korrelierten Größe lernen. Für eine Erstellung von optimierten Steuerparametern kann ein zweites neuronales Netz als aktuelle Kopie dieses an die Maschine angeschlossenen neuronalen Netzes verwendet werden.

Vorteilhaft wird zur Ermittlung der optimierten Steuerparameter ein iteratives Verfahren durchgeführt, bei dem insbesondere durch das neuronale Netz, welches ein Modell der Papierwickelvorrichtung und dabei insbesondere des Nip darstellt, der Zusammenhang zwischen den Steuer- und Einflußgrößen und der Bahnkraft bzw. der mit ihr korrelierten Größe modelliert und mit der modellierten Bahnkraft die Wickelgüte aus dem bekannten Zusammenhang aus dem Stand der Technik errechnet wird. Falls eine mit der Bahnkraft korrelierte Größe modelliert wird, besteht die Möglichkeit, daß diese direkt meßbar ist, wie dies für die mittlere Lagendicke gilt. Diese errechnete Wickelgüte kann im Anschluß mit der gewünschten zu erzielenden Wickelgüte beim Wikkelvorgang vergleichen werden und die Steuerparameter können, quasi Off-Line, allein durch Einsatz des Modelles an den Betrieb angepaßt werden, indem sie fortwährend verändert werden, bis sich die gewünschte Wickelgüte mit hinreichender Genauigkeit einstellt.

Vorteilhaft läßt sich aus der Differenz der Wikkelgüte zwischen zwei benachbarten Optimierungsschritten und damit zusammenhängenden Veränderungen der Steuerparameter, die diese Optimierungsschritte betreffen auf eine optimale Veränderungsrichtung der Steuerparameter schließen, damit in einem weiteren Optimierungsschritt in die richtige Richtung veränderte Steuerparameter vorgegeben werden können.

Vorteilhaft werden durch das vorgeschlagene Verfahren Sollwerttrajektorien für die Steuerparameter bereitgestellt, da sich die Meßgrößen im Verlaufe des Wickelvorgangs ändern und angepaßte Steuergrößen erforderlich sind.

Besonders vorteilhaft läßt sich eine Papierwikkelvorrichtung oder ein Rollenschneider mit den wie vorgeschlagen optimierten Steuerparametern bzw. Sollwerttrajektorien betreiben, da damit die eingangs beschriebenen Nachteile vermieden werden und ein höheres Qualitätsniveau beim Papierwickelvorgang erzielbar ist.

Besonders vorteilhaft wird das vorgeschlagene Verfahren mit Hilfe einer Anordnung durchgeführt, bei der das neuronale Netz direkt mit der Papierwickelvorrichtung gekoppelt ist und diesem die relevanten Meßgrößen, sowie beispielsweise die Einflußgrößen des Papiers direkt zugeführt werden können, da damit ständig im On-line-Betrieb beim Wickelvorgang das neuronale Netz nachtrainiert werden kann. Für eine fallweise anfallende Optimierung von Steuerparametern für weitere Wickelvorgänge kann einfach eine Kopie des neuronalen Netzes gezogen werden. Somit steht immer die aktuellste und am besten trainierte Version des Netzes zur Verfügung.

Besonders vorteilhaft läßt sich ein neuronales Netz an der Papierwickelvorrichtung eines Rollenschneiders anordnen, da Rollenschneider häufig verwendet werden, um Kundenkonfektionierungen von Papierbahnen durchzuführen.

Besonders vorteilhaft werden bei einem vorgeschlagenen Verfahren bzw. einer vorgeschlagenen Anordnung mindestens die Antiebsmomente der Wickelvorrichtung und der Elastizitätsmodul des Papiers gemessen, da diese Einflußgrößen sehr wichtig für die erreichbare Qualität beim Wickelvorgang sind.

Im folgenden wird die Erfindung anhand von Figuren weiter erläutert.

Figur 1 zeigt dabei eine schematische Darstellung eines Stützwalzenwicklers;
Figur 2 veranschaulicht den Zusammenhang zwischen Lagenanzahl, Bahnkraft und Wickelradius;
Figur 3 zeigt ein Blockschaltbild einer Papierwickelvorrichtung;
Figur 4 zeigt ein neuronales Netz mit Eingangs- und Ausgangsgrößen;
Figur 5 veranschaulicht den Zusammenhang zwischen Lagenanzahl und Radiuszunahme;

Figur 1 zeigt schematisch den Aufbau eines Stützwalzenwicklers mit dem Radius r als Wickelradius, F als der Bahnkraft vor der Stützwalze St und der Bahngeschwindigkeit v. Die Papierbahn ist mit P bezeichnet mit $F_{AW}$ ist die eingewickelte Bahnkraft oder auch die Bahnkraft auf dem Wickel bezeichnet. Mit $M_H$ ist das Antriebsmoment des Zentrumsantriebs der Wickelhülse bezeichnet und mit $M_S$ das Antriebsmoment der Stützwalze, wobei der Wickel mit Wi und die Hülse mit Hul bezeichnet ist. Im Berührungspunkt der beiden Walzen, der auch als Nip Ni bezeichnet wird, tritt eine Linienkraft Lin auf, die mit Reibdämpfereinstellungen beeinflußt werden kann. Auf dem Wickel Wi sind bereits mehrere Papierbahn übereinandergewickelt, was durch konzentrische Kreise angedeutet ist.

Bei Papierwickelvorrichtungen, wie sie insbesondere auch bei Rollenschneidern von Papierrollen eingesetzt werden, spielen für die Kriterien der erzielbaren Qualität die Bedingungen im sogenannten Nip, in dem die beiden Papierseiten von den verschiedenen Walzen berührt werden, eine besondere Rolle. Gemäß der Erfindung soll insbesondere das Verhalten der Wickelvorrichtung in Abhängigkeit der Steuerparameter und der Bahnkraft $F_{AW}$ im Nip durch ein neuronales Netz modelliert werden. Die Bahnkraft $F_{AW}$ hängt dabei ebenso wie die mit ihr korrelierten Größen Aufwickelhärte und mittlere Lagendicke von den Steuergrößen, sowie von weiteren Einflußgrößen z. B. des Papiers und der Umgebung ab. Steuergrößen sind beispielsweise die Antriebsmomente $M_S$ der Stützwalze St und des Zentrumsantriebs $M_H$, die Linienkraft Lin, mit welcher der Winkel Wi auf die Stützwalze St gepreßt wird, die Bahnzugkraft vor dem Nip F, sowie fallweise Reibdämpfereinstellungen, mit welchen vertikalen Bewegungen des Winkels Wi auf der Stützwalze St durch Hydraulikdämpfer oder durch Wirbelstrombremsen bedämpft werden. Einflußgrößen stellen beispielsweise die Papiereigenschaften, wie der Elastizitätsmodul, das Flächengewicht bezogen auf die Dichte, die Rauhigkeit, die Glätte, die Feuchte, die Porosität und die Bruchdehnung des Papiers dar. Ebenso müssen beispielsweise von den Stützwalzeneigenschaften deren Rauhigkeit und Reibwert, sowie Geometriedaten wie beispielsweise die Papierbahnbreiten berücksichtigt werden.

Die Vorgänge im Nip sind sehr komplex und analytisch schlecht beschreibbar. Deshalb existiert im Stand der Technik kein brauchbares Modell für das Nip-Verhalten eines Stützwalzenwicklers. Es soll folglich ein Modell des Nips datenbasiert durch ein neuronales Netz erzeugt werden. Gemäß dem Verfahren werden hierzu die Eingangsdaten des neuronalen Netzes, d. h. die Steuergrößen und die weiteren bereits beschriebenen Einflußgrößen und die Ausgangsdaten, d. h. die Bahnkraft $F_{AW}$, bzw. die mit ihr korrelierte Größe für eine Vielzahl von Wickelvorgängen gespeichert, um damit das neuronale Netz trainieren zu können. Dabei besteht das Problem, die Ausgangsgröße $F_{AW}$ zu bestimmen, da diese nicht meßbar ist. Vorgeschlagen wird deswegen zunächst diese nicht meßbare Größe $F_{AW}$, d. h. die Bahnkraft, aus bekannten meßbaren Größen zu errechnen. Analog kann die mittlere Lagendicke aus Radiuszunahme und Lagenanzahl berechnet werden

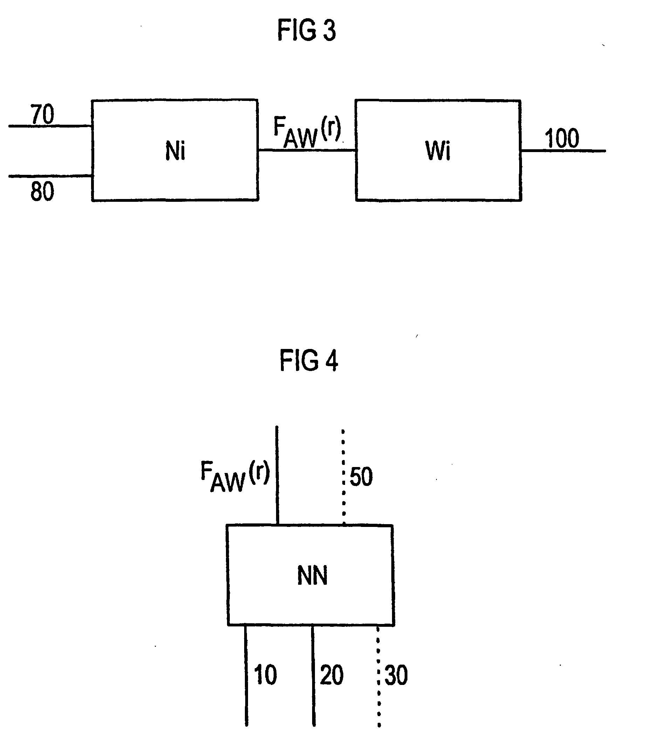

Wie Figur 2 zeigt, besteht ein Zusammenhang zwischen der Bahnkraft $F_{AW}$ dem Wickelradius $r_{AW}$ und der Lagenanzahl des gewickelten Papiers. Gemäß der Erfindung läßt sich also die Bahnkraft $F_{AW}(r)$ in Abhängigkeit des Wickelradius r rekonstruieren, indem beispielsweise der Wickelradius $r_{AW}$ in Abhängigkeit der Papierlagenanzahl z gemessen wird. Wie Figur 2 weiter zeigt, besteht ein Zusammenhang zwischen der Bahnkraft und der radialen Verformung des Papiers, die sich dann auf den Wickelradius in Abhängigkeit der Lagenanzahl und die Aufrollwickelhärte, sowie die mittlere Lagendicke auswirkt. In der Darstellung in Figur 2, sind beispielsweise bereits drei Papierlagen aufgewickelt. Den jeweiligen Papierlagen sind die Bahnkräfte $F_{AW}(1)$, $F_{AW}(2)$, $F_{AW}(3)$ zugeordnet. Dabei gilt für die momentan in Aufwicklung befindliche vierte Lage und deren Bahnkraft $F_{AW}(4)$ folgender Zusammenhang. Je höher die Bahnkraft $F_{AW}$ beim Aufwickeln der vierten Lage ist, um so höher ist der Radialdruck, der von der vierten Lage auf die darunterliegenden Papierbahnen ausgeübt wird und um so kleiner wird, aufgrund der elastischen Verformung des Papiers, der resultierende Wickelradius $r_{AW}$ des Wickels mit vier Lagen sein. In Figur 2 sind die den entsprechenden Wickellagen zugeordneten Wickelradien mit ihren Benummerungen entsprechend den Bahnkräften für die einzelnen Lagen bezeichnet, wobei $r_{AW}(0)$ den Radius der Hülse Hul, auf die das Papier aufgewickelt wird, angibt. Der Einfachheit halber sind die gewickelten Papierlagen in Figur 3 als konzentrische Kreise angenommen. Es besteht ebenfalls die Möglichkeit die Bahnkraft über die tangentiale Verformung des Papiers zu ermitteln, die jedoch hier nicht dargestellt ist. Vorzugsweise müssen hierfür in axialer Richtung der Papierrolle entsprechende Meßvorrichtungen vorgesehen sein, um die lagenabhängige Verformung zu bestimmen. Für die Bestimmung der Bahnkraft gilt dabei folgender funktionaler Zusammenhang:

$$r_{AW}(z) = f(F_{AW}(r))$$

Damit gibt sich für die Bahnkraft in Abhängigkeit des Radius

$$F_{AW}(r) = f^{-1}(r_{AW}(z)).$$

Nach der Rekonstruktion der Bahnkraft auf dem Wickel in Abhängigkeit der meßbaren Daten stehen die Parameter für das Training des neuronalen Netzes zur Nachbildung des Nips zur Verfügung. Die Bahnkraft bildet dabei bevorzugt die Targetgröße des neuronalen Netzes, während die Einfluß- und Steuergrößen die Vorgaben für die Sollwerttrajektorien, die zu lernen sind, bilden. Da diese Größen an einer realen Papierwikkelvorrichtung gemessen wurden, kann das Netz mit Hilfe dieser Vorgehensweise auf Basis eines normalen bekannten Lernverfahrens zu einem Nip-Modell trainiert werden, wobei das neuronale Netz als statischer Funktionsapproximator arbeitet.

Wie Figur 3 zeigt, besteht das vorgeschlagene Verfahren vorzugsweise aus zwei Funktionsblöcken, wobei ein Funktionsblock Ni den Nip nachbildet und der zweite Funktionsblock Wi den Wickel. Dem ersten Funktionsblock werden beispielsweise die bereits genannten Einfluß- und Steuergrößen 70 und 80 zugeführt, worauf dieser folglich eine Bahnkraft $F_{AW}$ in Abhängigkeit des Radius r ausgibt. Diese Bahnkraft wird dem Modell für den Wickel Wi zugeführt, auf dem sich in Abhängigkeit einer Bahnkraft eine Wickelgüte 100 einstellt. Dabei ist insbesondere zu berücksichtigen, daß also die Bahnkraft nicht über die Wickelgüte als Meßgröße rekonstruiert wird, sondern über die Abhängigkeit zwischen der Lagenanzahl und dem sich einstellenden Wickelradius, bzw. der mittleren Lagendicke und der Aufrollwickelhärte. Zur Bestimmung optimaler Steuerparameter für die Papierwickelvorrichtung wird allerdings aus $F_{AW}$ mittels aus dem Stand der Technik bekannter Zusammenhänge die Wickelgüte direkt errechnet. Gemäß dem Verfahren läßt sich eine bessere Wickelqualität erreichen, wenn für den gesamten Wickelvorgang ein mathematisches Modell vorliegt. Hierdurch ist es möglich, eine Optimierung bezüglich der Wickelgüte vorzunehmen, um optimale Steuertrajektorien für den Wickelvorgang zu erhalten. Das bedeutet, daß über die Wickelgüte 100 und die Steuertrajektorien 70 und 80 mit Hilfe der Zwischengröße Bankkraft $F_{AW}(r)$ oder einer mit ihr korrelierten Größe und der beiden Modelle Ni und Wi für den Nip und den Wickel optimale Steuertrajektorien für den gesamten Prozeß erstellt werden können. Als Bindeglied zwischen den beiden Teilmodellen fungiert die Bahnkraft $F_{AW}$ in Abhängigkeit von r oder eine mit der Bahnkraft korrelierte Größe. Es wird der Zwischenschritt über die Bahnkraft $F_{AW}$ gemacht, weil sich die Wickelgüte nicht direkt messen läßt, sondern eine Zerstörung des Papierwickels bedingt. Es ist natürlich denkbar, daß zukünftige Meßvorrichtungen es erlauben, daß die Wickelgüte direkt gemessen werden kann, dann kann wie vorgeschlagen das neuronale Netz direkt mit der Wickelgüte als Targetgröße und den Steuertrajektorien als Eingangsgrößen trainiert werden, um damit ein Gesamtmodell der Papierwickelvorrichtung zu erhalten.

Figur 4 zeigt ein neuronales Netz NN, das vorzugsweise gemäß der Erfindung ein Modell des Nips einer Papierwickelvorrichtung darstellt. Dem neuronalen Netz NN werden Größen 10 bis 30 zugeführt, woraus es Ausgangsgrößen $F_{AW}(r)$ und 50 erzeugt. Wie bereits zuvor beschrieben, werden dem neuronalen Netz beim Training bevorzugt Größen zugeführt, die an der realen Papierwickelvorrichtung gemessen werden. Als Targetgröße wird dabei bevorzugt über dem Zusammenhang zwischen Lagenanzahl und Wickelradius die Bahnkraft $F_{AW}$ rekonstruiert und beim Training des Netzes verwendet. Gemäß dem Verfahren kann es auch vorgesehen sein an einer Papierwickelvorrichtung ständig ein neuronales Netz mit anzuordnen, was während des Betriebs dieser Vorrichtung die entsprechenden Größen, die es für seinen Lernvorgang benötigt, zugeführt bekommt. Dies hat den Vorteil, daß das neuronale Netz ständig mit dem aktuellen Verhalten der Papierwickelvorrichtung trainiert wird und somit das Verhalten dieser Maschine immer besser nachbilden kann. Fallweise können dem neuronalen Netz als Größen 10 bis 30 Meßwerte zugeführt werden, die von Meßfühlern aufgenommen werden, welche spezifische Meßgrößen der Papieranordnung ermitteln. Fallweise können auch statische Eigenschaftsgrößen wie beispielsweise Geometriedaten, Papiereigenschaften und Umweltbedingungen beim Training des Netzes zugeführt werden. Die Zufuhr kann dabei durch Meßfühler, oder sonstige Eingabemittel bewerkstelligt werden. Falls es ggf. einmal möglich sein sollte die Wickelgüte des Papiers direkt am Wickel zu messen, ohne diesen zu zerstören, so kann selbstverständlich die Erfindung auch mit der Wickelgüte als Targetgröße ausgeführt werden. Vorzugsweise werden durch das neuronale Netz über die bereits beschriebene Vorgehensweise mit einem iterativen Verfahren durch Vorgabe von Steuerparametern und Ausrechnung der Wickelgüte über $F_{AW}$ und den bekannten Zusammenhang aus dem Stand der Technik zwischen $F_{AW}$ und der Wickelgüte optimale Steuertrajektorien ermittelt, indem ständig neue Parameter vorgegeben werden, bis eine im Prozeß zu erzielende und gewünschte Wickelgüte erreicht wird. Analog gilt diese Vorgehensweise für mit der Bahnkraft korrelierte Größen, die indirekt ableitbar sind, wie die mittlere Lagendicke. Diese am neuronalen Netz ermittelten Steuertrajektorien werden dann der realen Anordnung als Steuertrajektorien für den Papierwickelprozeß vorgegeben. Der Vorteil der Erfindung besteht insbesondere darin, daß die so ermittelten und optimierten Steuerparameter immer an das aktuelle Prozeßverhalten und die Einflußgrößen des Prozesses angepaßt sind, so daß ein höchst mögliches Maß an Qualität durch die vorgeschlagene Vorgehensweise erzielbar ist. Weiterhin wird durch das vorgeschlagene Verfahren eine optimale Genauigkeit bei der Einstellung erzielt, da es nicht auf Erfahrungswissen, sondern auf Meßgrößen und auf mathematischen Zusammenhängen bzw. neuronalen Modellen basiert.

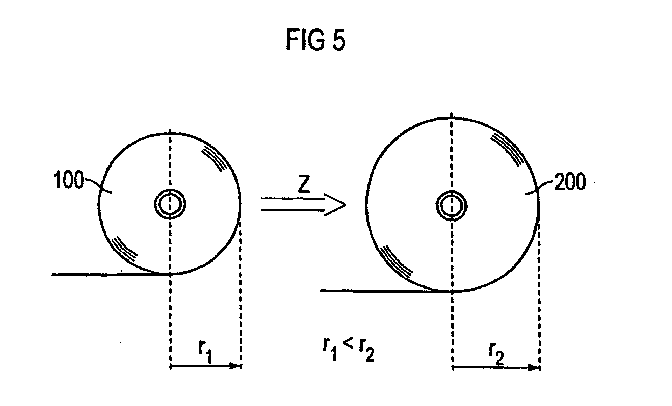

Wie Figur 5 zeigt, kann anstatt der Bahnzugkraft auch eine mit der Bahnzugkraft korrelierte Größe durch das neuronale Netz modelliert werden, eine Voraussetzung einer solchen Größe, die in diesem Zusammenhang allgemeiner modelliert werden kann, besteht allerdings darin, daß eine solche Größe mit der Bahnzugkraft ($F_{AW}$) korreliert sein muß, um für die Kopplung zwischen dem Nip Ni und dem Wickel Wi geeignet zu sein. Analog zu der Darstellung in Figur 3 tritt dann anstatt der Bahnzugkraft $F_{AW(r)}$ die entsprechend mit der Bahnzugkraft korrelierte Größe auf, welche durch das neuronale Netz modelliert wird. Als Beispiel für eine solche mit der Bahnzugkraft $F_{AW}$ korrelierte Größe ist hier die sogenannte Aufrollwickelhärte dargestellt. Für die Aufrollwickelhärte existieren verschiedenste Definitionen; im Folgenden soll die mittlere Papierlagendicke benutzt werden: während des Aufrollvorgangs wird die Anzahl der aufgewickelten Lagen z und die Radiuszunahme durch Differenzbildung $r_2 - r_1$ bestimmt, wie dies auch Figur 5 zeigt, wo der Wickel im Zustand 100 mit dem Radius $r_1$ vor der Aufwicklung von z-Lagen gezeigt ist. Nach dieser Aufwicklung befindet sich der Wickel im Zustand 200 und hat den Radius $r_2$. Über diese Veränderung des Außenradius nach der Aufwicklung von z-Lagen läßt sich die mittlere Lagendicke MLD bestimmen. Gemittelt wird typischerweise z. B. über Z=100 Lagen und man erhält die mittlere Lagendicke MLD, die ein Maß für die Härte der Wicklung darstellt zu:

$$MLD = \frac{r_2 - r_1}{z}.$$

Diese Gleichung wird während des Aufwickelvorganges wiederholt ausgewertet, so daß man einen Verlauf der mittleren Lagendicke MLD in Abhängigkeit des Dickeradius r erhält:

$$MLD = MLD(r).$$

Die mittlere Lagendicke verhält sich in diesem Fall genau umgekehrt proportional zur Bahnzugkraft $F_{AW}$, wie er in Figur 2 dargestellt ist. Die auf diese Weise ermittelte mittlere Lagendicke MLD verfügt über den wichtigen Vorteil, daß sie während des Betriebes eines Rollenschneiders Online berechenbar ist. Dazu müssen lediglich Radiusmessungen vorgenommen und die Papierlagen auf dem Wickel gezählt werden. Verfälscht wird die Berechnung gemäß der Gleichung lediglich durch die elastische Verformung der Papierlagen, die vor der Aufwicklung der z-Lagen zwischen Hülse und dem Außenradius $r_1$ liegen. Diese Verformung wird durch den Radialdruck bewirkt, den die unter Tangentialspannung aufgewickelten z-Lagen auf die darunterliegenden Papierlagen ausüben. Die Verfälschung kann jedoch im Rahmen der Weiterverarbeitung, der mittels der Mittelwertbildungsgleichung erhaltenen Werte korrigiert werden.

Nachdem die Bahnzugkraft $F_{AW}$ und die Aufrollwickelhärte bzw. der mittleren Lagendicke MLD korreliert sind, gilt folgender Zusammenhang: erhöht man die Bahnkraft $F_{AW}$, so wird das Papier mit einer größeren Tangentialspannung eingewickelt. Dies führt zu erhöhten Radialdrücken und zu einer erhöhten Lagenpressung. Daraus resultiert eine kleinere mittlere Lagendicke MLD, d. h. der Wickel wird härter gewickelt. $F_{AW}$ und MLD sind damit hoch korreliert. Gemäß der Darstellungen in Figur 3 kann dann der Nip unter Zuhilfenahme von MLD(r) anstatt von $F_{AW}(r)$ durch das neuronale Netz modelliert werden. Dabei hat die Verwendung der mittleren Lagendicke den Vorteil, daß diese, wie zuvor ausgeführt, unter Zuhilfenahme der Mittelwertbildungsgleichung und der Korrelation zwischen der Bahnkraft und der mittleren Lagendicke gemessen werden kann.

## Patentansprüche

1. Verfahren zur neuronalen Modellierung einer Papierwickelvorrichtung,

   a) bei dem in einem ersten Schritt Einfluß- und Steuergrößen einer Papierwickelvorrichtung (70, 80) für das Training eines neuronalen Netzes (NN) bereitgestellt werden, indem diese gemessen werden und mindestens in Abhängigkeit der gewickelten Lagenanzahl (z) und des zugehörigen Wickelradius (r) das Papierwikkels abgespeichert werden,

   b) bei dem aus dem Zusammenhang zwischen den Meßgrößen Wickelradius (r) und zugehöriger Lagenanzahl (z) des Papierwickels die Bahnkraft in der Papierbahn ($F_{AW}$) oder eine mit der Bahnkraft korrelierte Größe (MLD) in Abhängigkeit der Einfluß- und Steuergrößen (70, 80) der Papierwickelvorrichtung als Targetgröße für das neuronale Netz (NN) bestimmt wird,

   c) und bei dem das neuronale Netz (NN) als Modell der Papierwickelvorrichtung (Wi, St) über ein gängiges Lernverfahren mindestens mit den Einfluß- und Steuergrößen der Papierwickelvorrichtung (70, 80) als Eingangsgrößen und der davon abhängigen Bahnkraft ($F_{AW}$), bzw. der mit der Bahnkraft korrelierten Größe (MLD) als Ausgangsgröße trainiert wird.

2. Verfahren nach Anspruch 1, bei dem die Einfluß- und Steuergrößen ($M_H$, $M_S$, r) an einer realen Papierwickelvorrichtung und/oder am Papier, und/oder der Umgebung der Papierwickelvorrichtung oder des Papiers gemessen werden.

3. Verfahren nach einem der Ansprüche 1 oder 2, bei dem die Einfluß- und Steuergrößen ($M_H$, $M_S$, r) zeitabhängig gespeichert werden.

4. Verfahren zur Erzeugung von optimalen Steuergrößen für eine Papierwickelvorrichtung in Abhängigkeit einer gewünschten Wickelgüte (100) des Papierwickels,

a) bei dem in einem ersten Optimierungsschritt dem nach einem der Ansprüche 1 bis 3 erstellten neuronalen Modell (NN) Einflußgrößen (70) und zu optimierende erste Steuergrößen (80) der Papierwikkelvorrichtung zugeführt werden und daraus mit Hilfe des Modells (NN) eine erste Bahnkraft ($F_{AW}$), bzw. eine mit der ersten Bahnkraft korrelierte erste Größe (MLD) bestimmt wird,

b) bei dem in einem zweiten Schritt aus dem bekannten Zusammenhang zwischen Bahnkraft ($F_{AW}$) bzw. der mit der Bahnkraft korrelierten Größe und Wikkelgüte (100) aus der ersten Bahnkraft ($F_{AW}$), bzw. der korrelierten ersten Größe (MLD) eine erste Wickelgüte (100) bestimmt wird,

c) und bei dem die erste Wickelgüte mit der gewünschten Wikkelgüte verglichen wird und in einem weiteren Optimierungsschritt dem Modell mindestens zu optimierende zweite Steuergrößen (80) der Papierwickelvorrichtung zugeführt werden, wobei diese Vorgehensweise solange beibehalten wird, bis die aus a) und b) bestimmte Wickelgüte (100) hinreichend genau mit der gewünschten Wikkelgüte übereinstimmt.

5. Verfahren nach Anspruch 4, bei dem die Veränderung der Wickelgüte (100) in Abhängigkeit der Änderung der Steuergrößen (80) zweier benachbarter Optimierungsschritte bestimmt wird und aus dieser Veränderung darauf geschlossen wird in welcher Weise die Steuergrößen für den nächsten Optimierungsschritt zu verändern sind, um zur gewünschten Wickelgüte zu gelangen.

6. Verfahren nach einem der Ansprüche 4 oder 5, bei dem Steuertrajektorien als zeitabhängige Abfolge von Steuergrößen erzeugt werden.

7. Betriebsverfahren für eine Papierwickelvorrichtung, bei dem der Papierwickelvorrichtung Steuergrößen zugeführt werden, welche nach einem der Ansprüche 4 bis 6 optimiert erzeugt wurden.

8. Anordnung zur neuronalen Modellierung einer Papierwickelvorrichtung,

a) die erste Mittel zum Messen von Einfluß- und Steuergrößen der Papierwickelvorrichtung in Abhängigkeit der gewickelten Lagenanzahl (z) und des zugehörigen Wickelradius (r) das Papierwickels aufweist,

b) die zweite Mittel zur Bestimmung der Bahnkraft in der Papierbahn ($F_{AW}$), bzw. einer mit der Bahnkraft korrelierten Größe als Targetgröße für ein neuronales Netz (NN) mindestens aus dem Zusammenhang zwischen den von den ersten Mitteln gemessenen Größen Wickelradius (r) und zugehöriger Lagenanzahl (z) des Papierwickels, sowie in Abhängigkeit der Einfluß- und Steuergrößen der Papierwikkelvorrichtung ($M_H$, $M_S$, r) aufweist, denen die von den ersten Mitteln gemessenen Größen zugeführt werden,

c) und die ein neuronales Netz (NN) als Modell der Papierwickelvorrichtung aufweist dem die Größen zugeführt werden, welche von den ersten und zweiten Mitteln bestimmt bzw. gemessen werden und das über ein gängiges Lernverfahren die Abhängigkeit der ihm zugeführten Größen voneinander lernt.

9. Anordnung nach Anspruch 8, die mindestens Mittel zum Speichern einer der gemessenen oder ermittelten Größen aufweist.

10. Anordnung nach Anspruch 8 oder 9, bei der die Papierwikkelvorrichtung als Tambourschneider ausgebildet ist.

11. Verfahren nach einem der Ansprüche 1 bis 7 bzw. Anordnung nach einem der Ansprüche 8 bis 10, bei dem bzw. der mindestens Antriebsmomente der Wickelvorrichtung, sowie der Elastizitätsmodul des Papiers gemessen werden.

**Claims**

1. Method for neural modelling of a paper winding device,

a) in which, in a first step, influencing and control variables belonging to a paper winding device (70, 80) are provided for training a neural network (NN) by the variables being measured and stored at least as a function of the wound number of layers (z) and of the associated reel radius (r) of the paper reel,

b) in which the relationship between the measured variables comprising the reel radius (r) and associated number of layers (z) of the paper reel are used to determine the web force in the paper web ($F_{AW}$) or a variable (MLD) correlated with the web force as a function of the influencing and control variables (70, 80) belonging to the paper winding device, as a target variable for the neural network (NN),

c) and in which the neural network (NN), as a model of the paper winding device (Wi, St), is trained via a familiar learning process, at least using the influencing and control variables belonging to the paper winding device (70, 80) as input variables and the web force ($F_{AW}$) dependent thereon or the variable (MLD) correlated with the web force as the output variable.

2. Method according to Claim 1, in which measurements are made of the influencing and control variables ($M_H$, $M_S$, r) on a real paper winding device and/or on the paper, and/or of the surroundings of the paper winding device or of the paper.

3. Method according to either of Claims 1 and 2, in which the influencing and control variables ($M_H$, $M_S$, r) are stored as a function of time.

4. Method of producing optimum control variables for a paper winding device as a function of a desired winding quality (100) of the paper reel,

   a) in which, in a first optimization step, the neural model (NN) set up in accordance with one of Claims 1 to 3 is fed with influencing variables (70) and first control variables (80) to be optimized and belonging to the paper winding device and, with the aid of the model (NN), the said variables are used to determine a first web force ($F_{AW}$) or a first variable (MLD) correlated with the first web force,

   b) in which, in a second step, from the known relationship between web force ($F_{AW}$) or the variable correlated with the web force and winding quality (100), a first winding quality (100) is determined from the web force ($F_{AW}$) or the correlated first variable (MLD),

   c) and in which the first winding quality is compared with the desired winding quality and, in a further optimization step, the model is fed with at least second control variables (80) to be optimized and belonging to the paper winding device, this procedure being maintained until the winding quality (100) determined from a) and b) agrees sufficiently accurately with the desired winding quality.

5. Method according to Claim 4, in which the change in the winding quality (100) as a function of the change in the control variables (80) of two adjacent optimization steps is determined, and this change is used to draw conclusions as to the manner in which the control variables are to be changed for the next optimization step in order to arrive at the desired winding quality.

6. Method according to either of Claims 4 and 5, in which control trajectories are generated as a time-dependent sequence of control variables.

7. Operating method for a paper winding device, in which the paper winding device is fed with control variables which have been generated in an optimized manner in accordance with one of Claims 4 to 6.

8. Arrangement for neural modelling of a paper winding device,

   a) which has first means of measuring influencing and control variables belonging to the paper winding device as a function of the wound number of layers (z) and the associated reel radius (r) of the paper reel,
   b) which has second means of determining the web force in the paper web ($F_{AW}$) or a variable correlated with the web force, as a target variable for a neural network (NN), at least from the relationship between the variables measured by the first means, comprising reel radius (r) and associated number of layers (z) of the paper reel, and as a function of the influencing and control variables of the paper winding device ($M_H$, $M_S$, r), to which the variables measured by the first means are fed,
   c) and which has a neural network (NN) as a model of the paper winding device, which is fed with the variables which are determined and measured, respectively, by the first and second means and which, via a familiar learning process, learns the dependence of the variables fed to it on one another.

9. Arrangement according to Claim 8, which has at least means of storing one of the measured or determined variables.

10. Arrangement according to Claim 8 or 9, in which the paper winding device is designed as a slitter/rewinder.

11. Method according to one of Claims 1 to 7 or arrangement according to one of Claims 8 to 10, in which at least drive torques of the winding device, and the modulus of elasticity of the paper are measured.

**Revendications**

1. Procédé pour technique neuronale de modélisation d'une bobineuse pour papier,

   a) dans lequel des grandeurs d'influence et de commande d'une bobineuse pour papier (70, 80) sont fournies dans une première étape pour l'apprentissage d'un réseau neuronal (NN), du fait que celles-ci sont mesurées et mémorisées au moins en fonction du nombre de couches (z) enroulées et du rayon de bobinage (r) correspondant du rouleau de papier,

b) dans lequel la force de bande dans la bande de papier ($F_{AW}$) ou une grandeur (MLD) en corrélation avec la force de bande est déterminée comme grandeur cible pour le réseau neuronal (NN) à partir de la relation entre les grandeurs de mesure, rayon de bobinage (r) et le nombre de couches (z) correspondant du rouleau de papier, et en fonction des grandeurs d'influence et de commande (70, 80) de la bobineuse pour papier,

c) et dans lequel le réseau neuronal (NN) est simulé comme modèle de la bobineuse pour papier (Wi, St) au moyen d'un procédé d'apprentissage courant au moins avec les grandeurs d'influence et de commande de la bobineuse pour papier (70, 80) comme grandeurs d'entrée et avec la force de bande ($F_{AW}$) qui en dépend, resp. la grandeur (MLD) en corrélation avec la force de bande comme grandeur de sortie.

2. Procédé selon la revendication 1, dans lequel les grandeurs d'influence et de commande ($M_H$, $M_S$, r) sont mesurées sur une bobineuse pour papier réelle et/ou sur le papier et/ou dans les environs de la bobineuse pour papier ou du papier.

3. Procédé selon l'une des revendications 1 ou 2, dans lequel les grandeurs d'influence et de commande ($M_H$, $M_S$, r) sont mémorisées en fonction du temps.

4. Procédé pour générer des grandeurs de commande optimales pour une bobineuse pour papier en fonction d'une qualité de bobinage (100) souhaitée pour le rouleau de papier,

a) dans lequel, dans une première étape d'optimisation, des grandeurs d'influence (70) et des premières grandeurs de commande (80) à optimiser de la bobineuse pour papier sont amenées au modèle neuronal (NN) créé suivant l'une des revendications 1 à 3, et une première force de bande ($F_{AW}$) resp. une première grandeur (MLD) en corrélation avec la première force de bande est déterminée à l'aide du modèle (NN),

b) dans lequel, dans une deuxième étape, une première qualité de bobinage (100) est déterminée à partir de la relation connue entre la force de bande ($F_{AW}$) resp. entre la grandeur en corrélation avec la force de bande et la qualité de bobinage (100) de la première force de bande ($F_{AW}$), resp. de la première grandeur (MLD) corrélée,

c) et dans lequel la première qualité de bobinage est comparée à la qualité de bobinage souhaitée et, dans une autre étape d'optimisation, au moins des secondes grandeurs de commande (80) à optimiser de la bobineuse pour papier sont amenées au modèle, cette manière de procéder étant conservée jusqu'à ce que la qualité de bobinage (100) déterminée par a) et b) corresponde suffisamment exactement à la qualité de bobinage souhaitée.

5. Procédé suivant la revendication 4, dans lequel la modification de la qualité de bobinage (100) est déterminée en fonction du changement des grandeurs de commande (80) de deux étapes d'optimisation consécutives et dans lequel il est conclu à partir de cette modification de quelle manière les grandeurs de commande doivent être modifiées pour l'étape d'optimisation suivante afin d'obtenir la qualité de bobinage souhaitée.

6. Procédé selon l'une des revendications 4 ou 5, dans lequel des trajectoires de commande sont créées comme séquence de grandeurs de commande dépendantes du temps.

7. Procédé opératoire pour une bobineuse pour papier, dans lequel des grandeurs de commande sont amenées à la bobineuse pour papier, celles-ci ayant été créées de manière optimisée selon l'une des revendications 4 à 6.

8. Dispositif pour technique neuronale de modélisation d'une bobineuse pour papier,

a) qui présente des premiers moyens pour la mesure de grandeurs d'influence et de commande de la bobineuse pour papier en fonction du nombre de couches (z) enroulées et du rayon de bobinage (r) correspondant du rouleau de papier,

b) qui présente des seconds moyens pour déterminer la force de bande dans la bande de papier ($F_{AW}$), resp. une grandeur en corrélation avec la force de bande, comme grandeur cible pour un réseau neuronal (NN) au moins à partir de la relation entre les grandeurs mesurées par les premiers moyens, rayon de bobinage (r) et nombre de couches (z) correspondant du rouleau de papier, ainsi qu'en fonction des grandeurs d'influence et de commande de la bobineuse pour papier ($M_H$, $M_S$, r), auxquels moyens sont amenées les grandeurs mesurées par les premiers moyens,

c) et qui présente un réseau neuronal (NN) comme modèle de la bobineuse pour papier, auquel les grandeurs sont amenées, celles-ci étant déterminées resp. mesurées par les premiers et les seconds moyens, et qui apprend la dépendance des grandeurs qui lui sont amenées au moyen d'un procédé d'apprentissage courant.

9. Dispositif selon la revendication 8, qui présente au moins des moyens pour mémoriser l'une des grandeurs mesurées ou déterminées.

10. Dispositif selon la revendication 8 ou 9, dans lequel la bobineuse pour papier est formée comme coupeuse-bobineuse.

11. Procédé selon l'une des revendications 1 à 7 resp. dispositif selon l'une des revendications 8 à 10, dans lequel au moins des moments d'entraînement de la bobineuse ainsi que le module d'élasticité du papier sont mesurés.

## FIG 1

## FIG 2

## FIG 3

70 —— [ Ni ]   $F_{AW}(r)$   [ Wi ] —— 100
80 ——

## FIG 4

$F_{AW}(r)$   50

[ NN ]

10   20   30

## FIG 5

$r_1 < r_2$